# EUROPÄISCHE PATENTSCHRIFT

(11) **EP 4 508 958 B1**
(45) Veröffentlichungstag und Bekanntmachung des Hinweises auf die Patenterteilung: **06.05.2026**
(21) Anmeldenummer: 23192188.3
(22) Anmeldetag: 18.08.2023
(51) Int. Cl.: A01B 63/00, F15B 11/028, A01C 7/20, A01B 76/00, A01B 63/114, F15B 19/00

(54) **VERFAHREN ZUR AUSRÜSTUNG ODER NACHRÜSTUNG EINES LANDWIRTSCHAFTLICHEN ARBEITSFAHRZEUGS MIT EINEM ANBAUGERÄT**
METHOD FOR EQUIPPING OR RETROFITTING AN AGRICULTURAL WORKING VEHICLE WITH AN IMPLEMENT
PROCÉDÉ D'ÉQUIPEMENT OU DE MODERNISATION D'UN VÉHICULE DE TRAVAIL AGRICOLE DOTÉ D'UN ÉQUIPEMENT RAPPORTÉ

(43) Veröffentlichungstag der Anmeldung: 19.02.2025
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-A1- 2 803 254
- WO-A1-2019/023581
- US-A1- 2017 241 447
- US-B1- 11 246 254
- US-B2- 9 144 189

## Beschreibung

### TECHNISCHES GEBIET DER ERFINDUNG

Die Erfindung betrifft ein Verfahren zur Ausrüstung oder Nachrüstung eines landwirtschaftlichen Arbeitsfahrzeugs mit einem Anbaugerät. Beispielsweise handelt es sich bei dem Arbeitsfahrzeug um einen Traktor, während es sich bei dem Anbaugerät um ein Säaggregat oder ein Hackaggregat handeln kann. Üblicherweise sind an einem Arbeitsfahrzeug an einem Querbalken des Arbeitsfahrzeuges mehrere derartige Anbaugeräte nebeneinander in vorgegebenen lateralen Abständen angeordnet. Handelt es sich bei dem Anbaugerät um ein Säaggregat, kann auf diese Weise Saatgut in mehreren Reihen ausgebracht werden. Handelt es sich bei den Anbaugeräten um Hackaggregate, kann eine gleichzeitige Bearbeitung von unerwünschtem Beiwuchs im Bereich mehrerer Pflanzreihen erfolgen.

### STAND DER TECHNIK

US 9,144,189 B2 offenbart einen Traktor, an welchem an einer Querstange in vorbestimmten Abständen über Parallelogrammführungen Säaggregate gehalten sind. An einem Hauptrahmen des Säaggregates sind Behälter für Saatgut und Düngemittel gehalten. Das Saatgut wird aus dem Behälter über eine Säeinheit vereinzelt und über ein Särohr in vorbestimmten zeitlichen Abständen dem Ackerboden zugeführt. Hierbei wird das Passieren des Saatguts in dem Särohr mittels eines Sensors erfasst. Der zeitliche Abstand, mit dem das Saatgut abgegeben wird, hängt von dem gewünschten Abstand des Saatguts in einer Furche des Ackerbodens sowie der Fahrgeschwindigkeit des Traktors ab. An dem Hauptrahmen des Säaggregates ist ein weiterer Rahmen gehalten. An diesem weiteren Rahmen sind vor dem Abgabebereich des Saatgutrohrs Furchenräder drehbar gelagert, welche die Furche schaffen, in denen das Saatgut abgelegt werden sollen. Des Weiteren ist an dem weiteren Rahmen ein Schließrad gelagert, welches die Furche nach dem Ablegen des Saatguts wieder schließt. Schließlich ist an dem weiteren Rahmen über einen verschwenkbaren Arm ein Abstützrad gelagert, welches die Bewegung des Säaggregates über den Ackerboden in vertikaler Richtung führt und möglichst mit einer definierten Anpresskraft an den Ackerboden angepresst werden soll. Die Anpresskraft des Abstützrades wird über einen Anpresskraftsensor gemessen. Um die Anpresskraft beeinflussen zu können, übt ein Hydraulikzylinder eine Kraft auf eine Koppelschwinge der Parallelführung aus. Hierzu ist ein Fußpunkt des Hydraulikzylinders an der Koppelschwinge der Parallelogrammführung angelenkt, während der andere Fußpunkt des Hydraulikzylinders an einer Halterung angelenkt ist, die an dem Querbalken befestigt ist. Auf Grundlage der von dem Anpresskraftsensor des Anpressrades gemessenen Anpresskraft wird ein Magnetventil angesteuert, welches den Druck in dem Hydraulikzylinder steuert. Bekannt ist aus US 9,144,189 B2 auch eine Ausführungsform, bei der die Drücke in den beiden entgegengesetzt wirkenden Druckkammern des Hydraulikzylinders mittels zweier Magnetventile gesteuert werden. Das Magnetventil kann als direkt gesteuertes proportionales Druckregelventil ausgebildet sein, in welches eine Druckbegrenzungsfunktion zur Begrenzung des ausgangsseitigen Druckes integriert sein kann. Die von dem Anpresskraftsensor gemessene Anpresskraft kann dem Benutzer angezeigt werden. Überschreitet die gemessene Anpresskraft einen Schwellwert, kann eine Ansteuerung des Magnetventils zur Veränderung des Drucks in dem Hydraulikzylinder erfolgen, um die Anpresskraft zu reduzieren. Möglich ist auch, dass die hydraulische Beaufschlagung des Hydraulikzylinders über ein elektromagnetisch vorgesteuertes Sperrventil erfolgt, mit dem lediglich eine Druckbeaufschlagung einer Hubkammer des Hydraulikzylinders erfolgt, wenn die Anpresskraft einen Schwellwert überschreitet. Möglich ist auch, dass in den Hydraulikzylinder eine Feder integriert ist, die komprimiert wird, wenn der Hydraulikzylinder ausgefahren wird und somit die Anpresskraft erhöht wird. Hierbei kann die Vorspannung der Feder in dem Hydraulikzylinder von dem Benutzer manuell eingestellt werden. An dem Hauptrahmen kann auch ein Beschleunigungssensor befestigt sein, der die vertikale Geschwindigkeit und Beschleunigung des Säaggregates erfasst. Auf Grundlage des Signals des Beschleunigungssensors soll eine Beurteilung der Gleichmäßigkeit der Fahrbewegung des Säaggregates über den Ackerboden ermöglicht werden. An einen hydraulischen Steuerkanal für eine Druckkammer des Hydraulikzylinders kann ein Drucksensor angeschlossen werden. Zu vermuten ist, dass das Signal eines derartigen Drucksensors herangezogen wird, um eine Regelung dieses Druckes durch das Magnetventil auf einen Soll-Druck zu ermöglichen, der anhand der von dem Anpresskraft-Sensor ermittelten Anpresskraft ermittelt worden ist. Ein beabstandet von dem Hydraulikzylinder, offensichtlich im Bereich der Fahrerkabine des Arbeitsfahrzeugs angeordneter Monitor zeigt dem Bediener aktuelle Betriebsgrößen des Säaggregates an. Hierzu verfügt der Bildschirm über eine Steuereinheit, der Messignale von Sensoren des Säaggregates zugeführt werden. Diese Steuereinheit erzeugt auch das elektrische Steuersignal für das mindestens eine Magnetventil zur Steuerung der Drücke in den Druckkammern des Hydraulikzylinders.

Auch gemäß US 11,246,254 B1 wird die Anpresskraft eines Säaggregates über einen Hydraulikzylinder vorgegeben. Eine Hubkammer des Hydraulikzylinders wird über ein von einer elektronischen Steuereinheit angesteuertes Proportionalventil beaufschlagt. Hingegen wird die entgegengesetzt wirkende Anpresskammer des Hydraulikzylinders über ein von der elektronischen Steuereinheit angesteuertes Liftventil beaufschlagt. Das Liftventil ist als 3/2-Wege-Magnetventil ausgebildet. Dem Liftventil ist ein passives Druckregelventil zur Erzeugung eines konstanten Ausgangsdrucks vorgeordnet, welches zur Herbeiführung des konstanten Ausgangsdrucks eine passive Verbindung des Ausgangs entweder mit einer Pumpe oder einer Drucksenke bereitstellt. Die Regelung der Steuereinheit erfolgt auf Grundlage eines Signals eines Anpresskraftsensors, welcher die Anpresskraft des Säaggregates erfasst.

### AUFGABE DER ERFINDUNG

Der Erfindung liegt die Aufgabe zugrunde, ein Verfahren zur Ausrüstung oder Nachrüstung eines landwirtschaftlichen Arbeitsfahrzeugs vorzuschlagen, welches insbesondere hinsichtlich
- der Signalflüsse und/oder
- der Berücksichtigung unterschiedlicher Typen von Arbeitsfahrzeugen, Anbaugeräten und/oder Kopplungseinrichtungen zwischen Arbeitsfahrzeug und Anbaugerät und/oder
- unterschiedlicher Einbau- und Montagebedingungen und/oder
- einer Auswertung und/oder
- der Gewährleistung einer vorbestimmten Anpresskraft
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung liegt insbesondere die Erkenntnis zugrunde, dass gemäß dem Stand der Technik, insbesondere gemäß US 9,144,189 B2, ein Hydraulikzylinder für eine Gewährleistung einer Anpresskraft des Anbaugeräts mit einer Ventileinheit mit einem Magnetventil in Ausgestaltung als Proportionalventil eine Baueinheit bildet, die über eine elektrische Steuerleitung mit einer zentralen Steuereinheit verbunden ist, die eine Baueinheit mit einem Bildschirm für den Bediener des Arbeitsfahrzeugs, der somit in der Fahrerkabine angeordnet sein muss, bildet. Dies erfordert eine lange elektrische Steuerleitung zwischen dem Hydraulikzylinder und damit dem Anbaugerät einerseits und der Fahrerkabine andererseits. Des Weiteren ist für eine derartige Ausführungsform erforderlich, dass die Steuereinheit im Bereich des Bildschirms und damit der Fahrerkabine über sämtliche Informationen verfügen muss, um das Steuersignal für die Ansteuerung des Hydraulikzylinder zu ermitteln. Erfolgt beispielsweise ein Anschluss dieser Steuerleitung an unterschiedliche Hydraulikzylinder, an unterschiedliche Typen oder Baugrößen von Anbaugeräten oder verfügt der Hydraulikzylinder über unterschiedliche kinematische Möglichkeiten und Montagemöglichkeiten, müssen in die zentrale Steuereinheit des Traktors unterschiedliche Parametersätze eingegeben werden.

Andererseits hat die Erfindung erkannt, dass die Ausgestaltung einerseits des Hydraulikzylinders und andererseits der Ventileinheit als eine Baueinheit nachteilig sein kann, beispielsweise hinsichtlich der Austausch- und Reparatur- und Wartungsmöglichkeiten.

Vor dem Hintergrund dieser Erkenntnis schlägt die Erfindung ein Verfahren vor, wie eine Ausrüstung eines landschaftlichen Arbeitsfahrzeugs, welches mit einem Anbaugerät ausgestattet ist, erfolgen kann. Alternativ kann mit dem erfindungsgemäßen Verfahren auch eine Nachrüstung eines bereits existierenden landwirtschaftlichen Arbeitsfahrzeugs mit einem Anbaugerät erfolgen, bei dem zuvor eine elektrohydraulische Ansteuerung des Anbaugeräts insbesondere zur Gewährleistung der Anpresskraft auf andere Weise erfolgt ist.

Erfindungsgemäß wird in dem Verfahren zunächst eine Hydraulikeinheit bereitgestellt, die separat von dem Hydraulikzylinder ausgebildet ist und über Leitungen, insbesondere Schläuche, mit dem Hydraulikzylinder verbunden ist. Es ist somit möglich, dass der Hydraulikzylinder einerseits und die Hydraulikeinheit andererseits einen Abstand von einander haben, der mehr als 10 cm, mehr als 20 cm, mehr als 30 cm, mehr als 50 cm oder mehr als 70 cm betragen kann, um lediglich einige, die Erfindung nicht beschränkende Beispiele zu nennen. Auf diese Weise können die Möglichkeiten für die Bauraumgestaltung erweitert werden.

Die Hydraulikeinheit ist als singuläre Baueinheit ausgebildet, bei der bspw. die Komponenten in ein gemeinsames Gehäuse integriert sein können oder in aneinander angeflanschte Module integriert sein können.

Die erfindungsgemäße bereitgestellte Hydraulikeinheit verfügt über einen Befestigungsbereich. Über den Befestigungsbereich kann die Hydraulikeinheit an dem Anbaugerät, insbesondere einem Rahmen des Anbaugeräts, befestigt werden, wobei aber auch durchaus möglich ist, dass die Befestigung der Hydraulikeinheit an dem Querbalken oder dem Traktor erfolgt.

Des Weiteren beinhaltet die erfindungsgemäß bereitgestellte Hydraulikeinheit eine elektronische Steuereinheit.

Die erfindungsgemäß bereitgestellte Hydraulikeinheit weist auch einen Anschluss für eine Drucksenke, insbesondere einen Tank, und einen Anschluss für eine Druckquelle, insbesondere einen unter Druck stehenden Behälter oder eine Pumpe, auf.

Die erfindungsgemäß bereitgestellte Hydraulikeinheit weist des Weiteren einen Anschluss für eine zu einer Druckkammer des Hydraulikzylinders führende Hydraulikleitung auf. Möglich ist, dass lediglich eine Druckkammer druckbeaufschlagt wird, während diese Druckkammer dann gegen eine Rückstellfeder arbeitet. Vorzugsweise weist die Hydraulikeinheit aber zwei Anschlüsse auf, wobei dann ein Anschluss über eine Hydraulikleitung mit einer eine Hubkammer bildenden Druckkammer verbunden ist, während der andere Anschluss über eine weitere Hydraulikleitung mit einer als Anpresskammer ausgebildeten Druckkammer des Hydraulikzylinders verbunden ist.

Erfindungsgemäß weist die bereitgestellte Hydraulikeinheit ein Ventil auf. Das Ventil wird von der elektronischen Steuereinheit zur Vorgabe des Drucks an dem Anschluss für die zu der Drucckammer des Hydraulikzylinders führende Hydraulikleitung mit einem spezifischen Steuersignal angesteuert. Möglicherweise sind auch zwei Ventile vorhanden, die dann beide von der elektronischen Steuereinheit mit spezifischen Steuersignalen angesteuert werden und dann jeweils für eine Steuerung der Druckbeaufschlagung der Hubkammer und der Anpresskammer zuständig sind. Abweichend zu dem zuvor genannten Stand der Technik erfolgt somit die Ansteuerung nicht durch eine beabstandete, im Bereich des Traktors angeordnete zentrale Steuereinheit, sondern durch eine in die Hydraulikeinheit selbst integrierte Steuereinheit.

Erfindungsgemäß weist die Hydraulikeinheit des Weiteren einen Anschluss für eine Busleitung, insbesondere einen CAN-BUS, auf.

In dem erfindungsgemäßen Verfahren zur Ausrüstung oder Nachrüstung erfolgt dann die Befestigung der Hydraulikeinheit an dem Befestigungsbereich des Arbeitsfahrzeug, des Querbalkens oder dem Anbaugerät.

In dem erfindungsgemäßen Verfahren zur Ausrüstung oder Nachrüstung erfolgt dann eine Verbindung der Steuereinheit der Hydraulikeinheit über die Busleitung mit einer zentralen Steuereinheit und/oder einer Eingabe- und/oder Ausgabeeinheit. Die zentrale Steuereinheit kann dann beispielsweise Vorgaben für den Betrieb der mehreren, an dem Querbalken gehaltenen Anbaugeräte erzeugen, die dann mittels der Steuereinheit der Hydraulikeinheit umgesetzt und umgewandelt werden können. Alternativ oder kumulativ möglich ist, dass derartige Vorgaben an die Steuereinheit der Hydraulikeinheit von dem Bediener über eine Eingabeeinheit vorgegeben werden, bei der es sich beispielsweise um einen Schalter, Drehschalter, Drehregler, eine Tastatur oder einen Touchscreen handeln kann. Möglich ist aber auch, dass die Verbindung der Steuereinheit der Hydraulikeinheit über die Busleitung dazu dient, dass von der Steuereinheit der Hydraulikeinheit Daten, insbesondere Betriebsgrößen der Hydraulikeinheit und/oder des Anbaugeräts, an die Ausgabeeinheit übermittelt werden und diese dann von der Ausgabeeinheit unmittelbar oder unter weiterer Umrechnung oder Aufbereitung für den Bediener angezeigt werden. Bei der Ausgabeeinheit kann es sich um eine akustische und/oder optische Ausgabeeinheit, insbesondere einen Bildschirm handeln.

In dem erfindungsgemäßen Verfahren zur Ausrüstung oder Nachrüstung erfolgt dann eine Verbindung des mindestens einen Anschlusses mit der zu der Druckkammer des Hydraulikzylinders führenden Hydraulikleitung.

Ist im Rahmen der Erfindung eine derartige Konfiguration des Arbeitsfahrzeugs und des Anbaugeräts erfolgt, erfolgt eine Vorgabe und/oder Anpassung einer von der Steuereinheit der Hydraulikeinheit berücksichtigten spezifischen Abhängigkeit. Bei dieser spezifischen Abhängigkeit kann es sich bspw. um eine beliebige funktionale Abhängigkeit oder ein Kennfeld mit einer beliebigen Anzahl von Parametern handeln. Die spezifische Abhängigkeit wird dabei vorgegeben oder angepasst an einen spezifischen Ausstattungs- und/oder Montagetyp. Der spezifische Ausstattungs- und/oder Montagetyp und die zugeordnete vorgegebene oder angepasste spezifische Abhängigkeit beschreibt die Charakteristika der konkret an dem Arbeitsfahrzeug und Anbaugerät vorhandenen Ausstattungen und/oder die Art der Montage.

Als Beispiel kann es sich bei dem spezifischen Ausstattungs- und/oder Montagetyp
- um einen spezifischen Typ eines Arbeitsfahrzeugs (beispielsweise ein Arbeitsfahrzeug eines bestimmten Herstellers oder ein Arbeitsfahrzeug eines bestimmten Baureihentyp des Herstellers),
- einen spezifischen Typ einer Kopplungseinrichtung zwischen dem Arbeitsfahrzeug und dem Anbaugerät (beispielsweise eine spezifische Parallelogrammführung mit spezifischen Längen der Kopplungsschwingen, eine Kopplungseinrichtung mit einer vertikalen Führungseinrichtung u. ä.),
- einen spezifischen Typ des Hydraulikzylinders (insbesondere ein Volumen der Drucckammern des Hydraulikzylinders, eine Größe des Hydraulikkolbens oder der Differenz der Kolbenflächen, eine Länge oder ein Hub des Hydraulikzylinders u. ä.) und/oder
- einen spezifischen Typ der Kinematik des Arbeitsfahrzeugs und des Anbaugeräts (beispielsweise die Höhe der Kopplung zwischen Arbeitsfahrzeug und Anbaugerät, Länge des Arbeitsgeräts, usw.)
handeln, um lediglich einige die Erfindung nicht beschränkende Beispiele zu nennen.

Erfindungsgemäß werden die unterschiedlichen, jeweils vorhandenen spezifischen Ausstattungs- und/oder Montagetypen durch eine spezifische Vorgabe oder Anpassung der spezifischen Abhängigkeit so berücksichtigt, dass von der zentralen Steuereinheit (die für lediglich ein Anbaugerät, aber vorzugsweise sämtliche Anbaugeräte an einem Querbalken verantwortlich sein kann und vorzugsweise an dem Arbeitsfahrzeug angeordnet ist) und/oder von der Eingabe- und/oder Ausgabeeinheit verallgemeinerte Vorgaben gemacht werden können, die nicht an den jeweiligen spezifischen Ausstattungs- und/oder Montagetyp angepasst sind. Diese verallgemeinerten Vorgaben können dann über die spezifische Abhängigkeit umgewandelt werden in an den jeweiligen spezifischen Ausstattungs- und/oder Montagetyp angepasste spezifische Steuersignale für die Ventile der Hydraulikeinheit.

Erfindungsgemäß wird eine Kommunikation von der zentralen Steuereinheit über die Steuereinheit der Hydraulikeinheit mit dem Hydraulikzylinder genutzt, bei der die zentrale Steuereinheit verallgemeinerte Vorgaben machen kann, während dann die Steuereinheit der Hydraulikeinheit spezifische Steuersignale erzeugt.

Dieser erfindungsgemäße Lösungsgedanke soll anhand eines einfachen, die Erfindung nicht beschränkenden Beispiels erläutert werden:
Ist es möglich, dass an einem Traktor ein erstes Anbaugerät mit einem Behälter mit einem Düngemittel und/oder einer ersten Masse betrieben wird und für einen anderen Einsatzfall ein anderes spezifisches Anbaugerät ohne einen derartigen Behälter für ein Düngemittel oder mit einer von der ersten Masse abweichenden zweiten Masse betrieben wird, erfordert der Betrieb der beiden unterschiedlichen spezifischen Anbaugeräte mit derselben Anpresskraft, dass gemäß dem Stand der Technik US 9,144,189 B2 die zentrale Steuereinheit des Arbeitsfahrzeugs unterschiedliche spezifische Steuersignale zur Ansteuerung der Magnetventile der Baueinheit mit dem Hydraulikzylinder erzeugt, wozu der Steuereinheit des Traktors die jeweils aktuelle spezifische Masse oder der Ausstattungstyp des jeweils verwendeten Anbaugeräts zur Kenntnis gebracht werden muss, womit eine Umprogrammierung der Steuereinheit für die unterschiedlichen Anbaugeräte erfolgen muss. Anders gesagt kann die zentrale Steuereinheit nicht für die beiden unterschiedlichen Anbaugeräte dieselbe verallgemeinerte Vorgabe, nämlich dieselbe Anpresskraft, vorgeben, sondern die von der zentralen Steuereinheit ermittelten Steuersignale müssen bereits spezifisch ermittelt werden.

Hingegen kann erfindungsgemäß die zentrale Steuereinheit, die auch an dem Traktor vorgesehen sein kann, eine verallgemeinerte Vorgabe erzeugen, die eine Anpresskraft vorgibt, die dann unabhängig davon zur Anwendung kommen soll, welcher Typ von Anbaugerät gerade zusammen mit dem Arbeitsfahrzeug verwendet wird. Die Berücksichtigung der spezifischen Ausstattungstypen, nämlich für das genannte Beispiel die unterschiedlichen Massen der Anbaugeräte, erfolgt dann durch die in die Hydraulikeinheit integrierte Steuereinheit, die die verallgemeinerte Vorgabe der zentralen Steuereinheit über die spezifische Abhängigkeit umwandelt in die spezifischen Steuersignale. Hierbei werden die spezifischen Steuersignale dann so bemessen, dass unabhängig von den unterschiedlichen Massen der Anbaugeräte dieselbe Anpresskraft gewährleistet wird. Auf diese Weise können Umprogrammierungen oder Veränderungen der zentralen Steuereinheit, insbesondere einer Steuereinheit des Arbeitsfahrzeugs, vermieden werden.

Neben dem genannten Beispiel kann mittels der spezifischen Abhängigkeit eine Berücksichtigung unterschiedlicher Typen von Kopplungseinrichtungen zwischen einem Arbeitsfahrzeug und einem Anbaugerät, beispielweise unterschiedliche Kinematiken unterschiedlicher Parallelogrammführungen, berücksichtigt werden. Ist möglich, dass ein Hydraulikzylinder an unterschiedlichen Stellen einer Kopplungsschwinge einer Parallelogrammführung angelenkt wird, kann eine Berücksichtigung dieser unterschiedlicher Montagetypen ebenfalls über die spezifische Abhängigkeit erfolgen. Durchaus möglich ist aber auch, dass seitens der zentralen Steuereinheit als verallgemeinerte Vorgabe eine Art normierte Anpresskraft vorgegeben wird, während dann über die spezifische Abhängigkeit diese normierte Vorgabe so skaliert wird, dass an unterschiedlichen Typen von Anbaugeräten unterschiedliche Beträge der Anpresskraft aus der selben normierten Vorgabe resultieren.

Wie zuvor erläutert kann die spezifische angepasste oder vorgegebene Abhängigkeit berücksichtigt werden bei der Umwandlung der verallgemeinerten Vorgabe durch die zentrale Steuereinheit zu den spezifischen Steuersignalen für die Ventile der Hydraulikeinheit. Alternativ oder kumulativ kann die spezifische Abhängigkeit auch in umgekehrter Richtung wie folgt verwendet werden: Möglich ist, das spezifische Messsignale von Sensoren von dem jeweiligen spezifischen Ausstattungs- und/oder Montagetyp abhängig sind. Um lediglich ein die Erfindung nicht beschränkendes Beispiel zu nennen, kann ein Drehwinkelsensor einen Auslenkungswinkel einer Koppelschwinge einer Parallelogrammführung messen, um hieraus Rückschlüsse auf die Betriebsstellung der Parallelogrammführung und damit die Höhe des Anbaugeräts relativ zu dem Arbeitsfahrzeug zu ziehen. Finden dann unterschiedliche Ausstattungstypen in Form von Parallelogrammführungen mit unterschiedlichen Längen der Koppelschwingen oder anderweitig abweichenden Kopplungskinematiken Einsatz, korreliert derselbe erfasste spezifische Drehwinkel dann mit unterschiedlichen relativen Höhen des Anbaugeräts. Das dann spezifische Messsignal kann über die erfindungsgemäß vorgegebene oder angepasste spezifische Abhängigkeit umgerechnet werden in eine verallgemeinerte Messgröße, die dann von der Steuereinheit der Hydraulikeinheit an die zentrale Steuereinheit und/oder die Eingabe- und Ausgabeeinheit übertragen wird.

Im Rahmen der Erfindung kann eine Vorgabe oder Anpassung der spezifischen Abhängigkeit durch Überspielen eines Datensatzes erfolgen. Möglich ist auch, dass die Vorgabe oder Anpassung der spezifischen Abhängigkeit über eine Dateneingabe durch den Benutzer erfolgt. Möglich ist auch, dass dem Benutzer unterschiedliche spezifische Abhängigkeiten zur Auswahl angeboten werden, von denen dann der Benutzer die passende spezifische Abhängigkeit auswählen kann. Alternativ oder kumulative möglich ist, dass eine Vorgabe oder Anpassung einer spezifischen Abhängigkeit durch ein Testverfahren erfolgt. Um lediglich ein die Erfindung nicht beschränkendes Beispiel zu nennen, kann ein Anbaugerät mit einer definierten Zusatzmasse beaufschlagt werden und es kann dann zur Ermittlung der spezifischen Abhängigkeit eine Auswertung einer Veränderung eines Messsignals, insbesondere einer Veränderung der Anpresskraft, die von einem Anpresskraftsensor gemessen wird oder eine Druckänderung in einer Druckkammer des Hydraulikzylinders infolge der Zusatzmasse, zur Ermittlung der spezifischen Abhängigkeit ausgewertet werden. Schließlich ist auch möglich, dass eine Vorgabe oder Anpassung der spezifischen Abhängigkeit im Betrieb des Arbeitsfahrzeugs und des Anbaugeräts erfolgen, wozu auch eine künstliche Intelligenz Einsatz finden kann.

Für einen weiteren Vorschlag weist die Hydraulikeinheit einen Anschluss für einen Anpresskraftsensor auf. In dem erfindungsgemäßen Verfahren wird dann ein Anpresskraftsensor an den Anschluss angeschlossen. Hierbei kann die spezifische Abhängigkeit auch einen spezifischen Typ des Anpresskraftsensors und/oder dessen Montagetyp in der Form der Art der Integration des Antriebskraftsensors in das Anbaugerät und die Kinematik der Kopplungseinrichtung berücksichtigen. In diesem Fall kann die Steuereinheit der Hydraulikeinheit eine spezifische, von dem Anpresskraftsensor ermittelte Anpresskraft über die spezifische Abhängigkeit umrechnen in eine verallgemeinerte Anpresskraft, die dann einerseits für die weitere Verarbeitung durch die Steuereinheit der Hydraulikeinheit, beispielsweise für die Ansteuerung eines Magnetventils für die Druckbeaufschlagung der Druckkammern des Hydraulikzylinders, verwendet werden kann. Alternativ oder kumulativ kann dann das verallgemeinerte Anpresskraftsignal auch von der in die Hydraulikeinheit integrierten Steuereinheit (insbesondere über den CAN-BUS) an die zentrale Steuereinheit übermittelt werden.

Alternativ oder kumulativ möglich ist, dass die Hydraulikeinheit einen Anschluss für einen Kopplungskinematiksensor aufweist, wobei dann in dem erfindungsgemäßen Verfahren ein Kopplungskinematiksensor an den Anschluss angeschlossen wird. Bei dem Kopplungskinematiksensor kann es sich beispielsweise um einen Drehwinkelsensor handeln, der einen Schwenkwinkel einer Koppelschwinge einer Parallelogrammführung erfasst, oder ein Potentiometer oder einen Wegsensor, der einen absoluten, insbesondere vertikalen Weg des Anbaugeräts oder eines Bauelements der Kopplungskinematik erfasst, handeln. In diesem Fall berücksichtigt vorzugsweise die erfindungsgemäß vorgegebene oder angepasste spezifische Abhängigkeit einen spezifischen Typ der Kopplungskinematik und/oder einen spezifischen Typ des Kopplungskinematiksensors.

Alternativ oder kumulativ möglich ist, dass die Hydraulikeinheit einen Anschluss für einen Behälterinhalts-Sensor aufweist, wobei dann in dem erfindungsgemäßen Verfahren ein Behälterinhalts-Sensor an den Anschluss angeschlossen wird. Mittels des Behälterinhalts-Sensors wird unmittelbar oder mittelbar das Volumen eines Produkts in einem Behälter des Anbaugeräts erfasst. Beispielsweise kann mittels des Behälterinhalts-Sensors das Volumen, die Masse oder eine Anzahl von Saatgut in einem Saatgutbehälter des Anbaugeräts oder das Volumen oder die Masse oder ein Füllstand eines Düngemittels in einem Düngemittelbehälter gemessen werden. Der Behälterinhalts-Sensor kann eine Masse oder Gewichtskraft messen. Möglich ist aber auch, dass ein Füllstand mittels eines Radarsensors oder Ultraschallsensors erfasst wird. Ebenfalls möglich ist, dass der Behälterinhalts-Sensor mittelbar den Füllstand in dem Behälter ermittelt, indem der Betrieb einer Säeinheit eines Säaggregates überwacht wird, indem die Betriebsdauer der Säeinheit oder die Zahl des das Särohr passierenden Saatguts gezählt wird und hierauf auf die sich verringernde Menge des Saatguts in dem Saatgutbehälter geschlossen wird. Entsprechend kann auch eine Überwachung eines Betriebs einer Ausbringeinrichtung für ein Düngemittel erfolgen und hierauf auf den Füllstand des Düngemittels in dem Behälter geschlossen werden. In diesem Fall berücksichtigt vorzugsweise die erfindungsgemäß vorgegebene oder angepasste spezifische Abhängigkeit einen spezifischen Typ des Behälterinhalts-Sensors und/oder dessen Montagetyp in Form der Art der Integration des Behälterinhalts-Sensors und/oder einen spezifischen Typ des Produkts in dem Behälter. Wird zum Beispiel für Produkte unterschiedlicher Massen dieselbe volumetrische Veränderung des Füllstandes detektiert, kann über die spezifische Abhängigkeit berücksichtigt werden, dass dieselbe Füllstandsänderung infolge der unterschiedlichen Dichten der Produkte zu unterschiedlichen Veränderungen der Gewichtskraft des Anbaugeräts führen, womit dann eine Anpassung der Ansteuerung des Hydraulikzylinders erfolgen kann mit dem Ziel, dass dennoch eine konstante Anpresskraft gewährleistet wird.

Sofern zuvor unterschiedliche Anschlüsse angesprochen worden sind, kann es sich um einzelne Anschlüsse handeln oder die Anschlüsse können zu einem Gesamt-Anschlussstecker zusammengefasst sein. Die Anschlüsse können auch als Schnittstellen ausgebildet sein, wobei auch Schnittstellen als CAN-Schnittstelle ausgebildet sein können, sodass eine Übertragung der Signale über den CAN-BUS erfolgen kann.

Für die Art des mindestens einen in der Hydraulikeinheit eingesetzten Ventils zur Steuerung der Drücke in den Druckkammern des Hydraulikzylinders gibt es im Rahmen der Erfindung vielfältige Möglichkeiten. Für einen Vorschlag der Erfindung weist die Hydraulikeinheit mindestens ein direkt gesteuertes Proportionalventil auf. Hierbei kann das Proportionalventil auch in Schieberventil-Bauart ausgebildet sein. Ein derartiges Proportionalventil kann bei einem veränderlichen Eingangsdruck, insbesondere infolge von Förderunregelmäßigkeiten einer Pumpe oder eines sich verändernden Drucks einer Druckquelle, einen nahezu konstanten Ausgangsdruck bereitstellen, wobei dieser Ausgangsdruck dann abhängig von der Bestromung der Spule des Proportionalventils sein kann. Möglich ist, dass bei einer Erhöhung des Steuersignals infolge des Steuerstroms der Steuerspule eine proportionale Kraft auf einen Steuerkolben ausgeübt wird, welcher den an dem Ausgangsanschluss zu der Druckkammer des Hydraulikzylinders ausgeregelten Druck definiert. Das direkt gesteuerte Proportionalventil wird mit einem spezifischen Steuersignal angesteuert. Dieses spezifische Steuersignal wird in dem erfindungsgemäßen Verfahren unter Berücksichtigung einer verallgemeinerten Vorgabe der zentralen Steuereinheit und der spezifischen Abhängigkeit ermittelt.

Vorzugsweise ist eine Druckbegrenzungsfunktion für den Druck in der Hydraulikleitung zu einer Druckkammer, insbesondere der Anpresskammer, vorgesehen. Diese Druckbegrenzungsfunktion kann separat von dem direkt gesteuerten Proportionalventil bereitgestellt werden oder in das direkt gesteuerte Proportionalventil integriert sein. Die Druckbegrenzungsfunktion kann beispielsweise dazu genutzt werden, dass dann, wenn das Anbaugerät einen Stein oder eine anderweitige, einen erhöhten Widerstand bereitstellende Überhöhung des Ackerbodens überfährt, ein plötzlicher Anstieg der Anpresskraft und damit eine Erhöhung des Drucks in der Anpresskammer des Hydraulikzylinders vermieden oder begrenzt wird. In diesem Fall kann, beispielsweise zur Vermeidung einer Beschädigung eines Arbeitswerkzeugs des Anbaugeräts oder zum Vermeiden des Anhebens der Querstange, durch Öffnung des Druckbegrenzungsventils der Druck in der Anpresskammer des Hydraulikzylinders und damit die Anpresskraft auf einen Schwellwert begrenzt werden.

Für einen weiteren Vorschlag der Erfindung kann die Hydraulikeinheit mindestens einen Drucksensor aufweisen, der als spezifisches Drucksignal den Druck an dem Anschluss für die zu der Druckkammer des Hydraulikzylinders führende Hydraulikleitung, also den Steuerdruck für eine Druckkammer des Hydraulikzylinders, erfasst. In diesem Fall wird das Proportionalventil von der Steuereinheit unter Berücksichtigung des Drucksignals angesteuert. Für die Art der Berücksichtigung des Drucksignals gibt es im Rahmen der Erfindung unterschiedliche Möglichkeiten. Für eine erste Möglichkeit wird grundsätzlich das Proportionalventil auf Grundlage der Anpresskraft, die von dem Anpresskraftsensor ermittelt worden ist, so angesteuert, dass ein berechneter Druck erzeugt wird. Eine Regelung des Proportionalventils kann dann auch diesen Druck unter Rückführung des Drucksignals berücksichtigen. Für eine andere Möglichkeit wird das Drucksignal zumindest auch oder ausschließlich dafür verwendet, um eine Anpresskraft zur ermitteln. Sind die Drücke in den beiden Druckkammern bekannt, kann hieraus über die Kolbenflächen des Hydraulikzylinders und die Kinematik auf die Anpresskraft rückgeschlossen werden. Auf diese Weise kann zusätzlich zu der unmittelbaren Messung der Anpresskraft eine redundante Regelung der Anpresskraft gewährleistet werden. Möglich ist auch, dass auf Grundlage des Drucksignals eine Plausibilisierung des Signals eines Anpresskraftsensors erfolgt. Schließlich ist sogar möglich, dass kein Anpresskraftsensor verwendet wird, sondern eine ausschließliche Ansteuerung des Proportionalventils auf Grundlage des mindestens einen Drucksignals erfolgt.

Für einen weiteren Vorschlag der Erfindung verfügt die Steuereinheit der Hydraulikeinheit über Steuerlogik, mittels welcher eine Ermittlung eines Bodenbewertungsfaktors erfolgt. Der Bodenbewertungsfaktor kann beispielsweise eine Ebenheit des Ackerbodens charakterisieren, also insbesondere Aufschluss darüber geben, welche Welligkeit, Unebenheiten, Rillen u. ä. der Ackerboden entlang der Fahrlinie aufweist und/oder mit welcher Dynamik sich das Anbaugerät über den Ackerboden bewegt. Alternativ oder kumulativ kann der Bodenbewertungsfaktor einen Widerstand des Bodens, insbesondere durch unterschiedliche Dichten des Ackerbodens oder durch unterschiedliche Bestandteile, Steine oder andere Hindernisse des Ackerbodens beschreiben. Ebenfalls möglich ist, dass der Bodenbewertungsfaktor unterschiedliche Zusammensetzungen des passierten Ackerbodens beschreibt. Die Ermittlung des Bodenbewertungsfaktors kann beispielsweise auf Grundlage der Auswertung des Anpresskraftsignals eines Anpresskraftsensors erfolgen: So kann eine Unebenheit des Ackerbodens, ein sich verändernder Widerstand des Ackerbodens und/oder eine sich verändernde Zusammensetzung des Ackerbodens anhand der Fluktuationen der Anpresskraft detektiert werden. Alternativ oder kumulativ kann in entsprechender Weise der Bodenbewertungsfaktor anhand des gemessenen Drucks in den Druckkammern des Hydraulikzylinders bzw. in den Zuleitungen und im Bereich der Anschlüsse der Hydraulikeinheit ermittelt werden. Alternativ oder kumulativ kann der Bodenbewertungsfaktor anhand eines Kinematiksensors, insbesondere eines Kopplungskinematiksensors ermittelt werden, der insbesondere eine Relativbewegung des Anbaugerätes relativ zu dem Arbeitsfahrzeug erfasst, die durch eine Veränderung des Bodens verursacht ist.

Für einen weiteren Vorschlag der Erfindung wird auf Grundlage
- eines Messsignals mindestens eines Drucksensors für eine Messung des Drucks in einer Druckkammer in dem Hydraulikzylinder und/oder
- eines Messsignales eines Kopplungskinematiksensors, insbesondere eines Drehwinkelsensors, der den Drehwinkel einer Koppelschwinge einer Parallelogrammführung erfasst, und/oder
- eines Messsignales eines Anpresskraftsensors
ein oder der Bodenbewertungsfaktor ermittelt, wobei alternativ oder zusätzlich auf dieser Grundlage auch eine Regelung des Drucks in mindestens einer Druckkammer in dem Hydraulikzylinder erfolgen kann.

Für diese Ausführungsform werden im Folgenden einige Beispiele genannt:
- Möglich ist, dass ein Anpressrad derart mit einem Furchenrad an dem Anbaugerät gekoppelt ist, dass der Abstand der Aufstandsfläche des Anpressrades und des unteren Endbereichs des Furchenrades während eines Betriebs fest vorgegeben ist. Wird in diesem Fall die Abstützkraft des Anpressrades an den Ackerboden gemessen und trifft das Furchenrad auf einen verdichteten Bodenbereich, einen verhärteten Bodenbereich oder einen Stein, kann dies zu erhöhten, auf das Furchenrad wirkenden Kräften führen, die einerseits zur Beschädigung des Furchenrades führen können und andererseits dazu führen können, dass die Kraft zum Anheben des Anbaugerätes führt, was temporär zu einer Verringerung der Anpresskraft des Anpressrades führen kann. Ohne einen Kopplungskinematiksensor, der das Anheben des Anbaugerätes erfasst, würde eine auf dem Anpresskraftsensor basierende Regelung der Drücke in dem Hydraulikzylinder dann den Druck in der Anpresskammer erhöhen, was dazu führen würde, dass die gesamte, auf das Anbaugerät wirkende resultierende Kraft erhöht würde. Erfindungsgemäß kann in einem derartigen Fall anhand des Kopplungskinematiksensors erkannt werden, dass das Anbaugerät angehoben wird. Die Regelung kann dann für den Fall, dass lediglich ein kurzeitiges Anheben oder entlasten des Anpressrades erfolgt, keine Beeinflussung der Druckbeaufschlagung des Hydraulikzylinders vornehmen. Dies hat einerseits den Vorteil, dass nicht vergrößerte Kräfte auf das Anbaugerät wirken und andererseits die auf das Furchenrad wirkende Beanspruchung reduziert wird. Eine derartige Aussetzung der Regelung findet vorzugsweise Einsatz, wenn sich lediglich eine dynamische, kurzzeitige Veränderung eines Messsignals eines Kopplungskinematiksensors ergibt.
- Indiziert der Kopplungskinematiksensor eine länger andauernde Vergrößerung der Arbeitshöhe des Anbaugeräts, kann dies als Indiz darauf gewertet werden, dass das Anbaugerät in einen Bereich des Ackerbodens gelangt ist, in dem die Bodenfestigkeit, beispielsweise infolge einer veränderten Zusammensetzung und/oder einer Bodenverdichtung, erhöht ist. Um in diesem Fall zu gewährleisten, dass dennoch dieselbe Furchentiefe erzeugt wird, kann die Regelung des Drucks auf Grundlage des Anpresskraftsensors aktiviert werden, woraus dann eine Erhöhung der Anpresskraft des Anpressrades resultiert. Die Regelung kann dann auch das Messsignal des Kopplungskinematiksensors berücksichtigen, indem der Druck in der Anpresskammer soweit erhöht wird, dass wieder das ursprüngliche Messsignal des Kopplungskinematiksensors, insbesondere ein ursprünglicher Drehwinkel einer Koppelschwinge, herbeigeführt ist.

Für die vorgenannten Ausführungsbeispiele kann jeweils die spezifische Abhängigkeit verwendet werden. So kann beispielsweise aus einem spezifischen gemessenen Drucksignal ein verallgemeinertes Drucksignal unter Berücksichtigung der spezifischen Abhängigkeit berücksichtigt werden, wobei die spezifische Abhängigkeit dann bspw. die Geometrie des Hydraulikzylinders und dessen Integration in die Kopplungskinematik berücksichtigen kann. Alternativ oder kumulativ können die spezifischen Messsignale, die wie zuvor erläutert zur Ermittlung des Bodenbewertungsfaktors herangezogen werden, über die spezifische Abhängigkeit umgerechnet werden in verallgemeinerte Messsignale.

Im Rahmen der Erfindung können an einem Querbalken nebeneinander mehrere Anbaugeräte gehalten sein. In diesem Fall können Teilgruppen der Anbaugeräte oder die Anbaugeräte jeweils eine zugeordnete Hydraulikeinheit aufweisen. Die Hydraulikeinheiten können dann mit denselben verallgemeinerten Vorgaben von der zentralen Steuereinheit beaufschlagt werden. In diesem Fall können die Hydraulikeinheiten dieselben oder unterschiedliche spezifische Abhängigkeiten aufweisen. Möglich ist aber auch, dass die Hydraulikeinheiten mit unterschiedlichen verallgemeinerten Vorgaben beaufschlagt werden, was beispielsweise dann der Fall ist, wenn das Arbeitsfahrzeug mit den Anbaugeräten einen Rand eines Feldes passiert und hier lediglich die im Bereich des Feldes angeordneten Anbaugeräte betrieben werden sollen, während außerhalb des Feldes angeordnete Anbaugeräte zu deaktivieren sind.

Für einen weiteren Vorschlag der Erfindung kann auf Grundlage eines spezifischen Messsignals (insbesondere eines Anpresskraftsignals, eines Drucksignals einer Druckkammer des Hydraulikzylinders oder eines Kinematiksensorsignals der Kopplungskinematik) eine Regelung einer Dämpfung erfolgen. Wird beispielsweise anhand des Messsignals erfasst, dass das Anbaugerät vertikale Oszillationen mit schwankender Anpresskraft infolge von Unebenheiten oder unterschiedlichen Widerständen des Ackerbodens ausgesetzt ist, kann eine Dämpfung erhöht werden, indem eine verstellbare Drossel verstellt wird. Möglich ist aber auch eine Erhöhung der Dämpfung durch eine aktive Regelung des Hydraulikzylinders, indem die entstehenden Schwingungen durch Erzeugung von Gegendrücken in den Druckkammern aktiv gedämpft werden.

Im Rahmen der Erfindung kann ein Anbaugerät eines beliebigen, an sich bekannten Typs eingesetzt werden. Für einen Vorschlag der Erfindung handelt es sich bei dem Anbaugerät um ein Säaggregat. Für eine alternative Anwendungsform handelt es sich bei dem Anbaugerät um ein Hackaggregat. Für einen besonderen Vorschlag der Erfindung findet in dem erfindungsgemäßen Verfahren für eine erste Betriebsweise ein Anbaugerät in Form eines Säaggregates Einsatz, während dann für eine zweite Betriebsweise das als Säaggregat ausgebildete Anbaugerät von dem Arbeitsfahrzeug demontiert wird und dann ein als Hackaggregat ausgebildetes Anbaugerät an demselben Arbeitsfahrzeug montiert wird. In diesem Fall können die unterschiedlichen Charakteristika einerseits des Säaggregates und andererseits des Hackaggregates durch die in der Steuereinheit der Hydraulikeinheit berücksichtigten spezifischen Abhängigkeiten einerseits für das Säaggregat und andererseits für das Hackaggregat berücksichtigt werden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

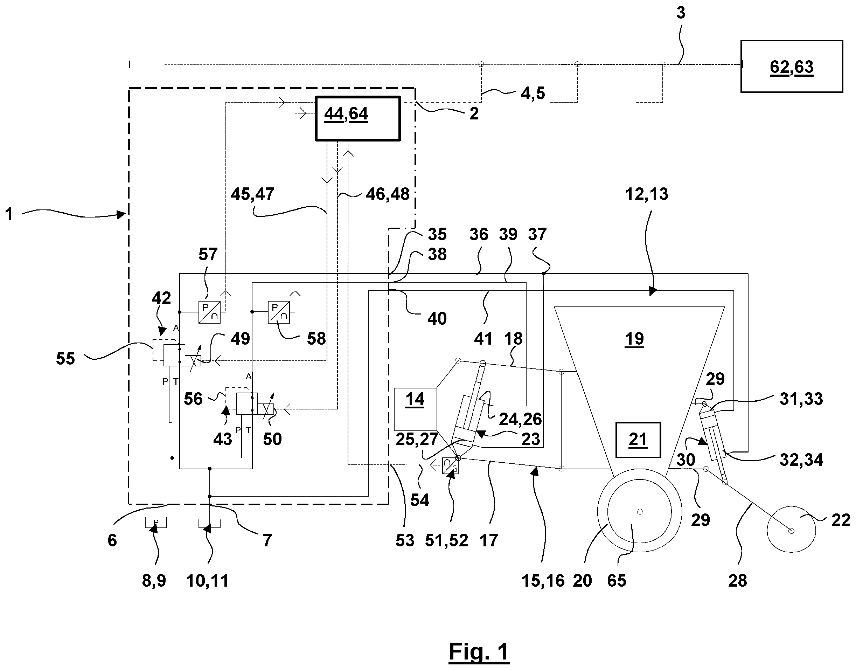

- **Fig. 1 bis 4**: zeigt stark schematisiert unterschiedliche Ausführungformen einer Hydraulikeinheit mit zugeordnetem Anbaugerät, welches hier als Säaggregat ausgebildet ist, und deren Verbindung über einen CAN-Bus mit einer zentralen Steuereinheit.

### FIGURENBESCHREIBUNG

**Fig. 1** zeigt eine Hydraulikeinheit 1. Die Hydraulikeinheit 1 verfügt über einen Anschluss 2, über den die Hydraulikeinheit 1 an einen CAN-BUS 3 angeschlossen ist. Über den CAN-BUS 3 empfängt die Hydraulikeinheit 1 verallgemeinerte Vorgaben 4 von einer zentralen Steuereinheit 62, die sich vorzugsweise in einer Fahrerkabine des Arbeitsfahrzeugs befindet. Des Weiteren werden über den Anschluss 2 und den CAN-BUS 3 verallgemeinerte Messgrößen 5, bei denen es sich vorzugsweise um eine Betriebsgröße handelt, an die zentrale Steuereinheit 62 übertragen.

Die Hydraulikeinheit 1 verfügt des Weiteren über Anschlüsse 6, 7. Über die Anschlüsse 6, 7 ist die Hydraulikeinheit 1 mit einer Druckquelle 8, insbesondere einer Pumpe 9, und einer Drucksenke 10, insbesondere einem Tank 11, verbunden.

Fig. 1 zeigt schematisch ein Anbaugerät 12, welches für das dargestellte Ausführungsbeispiel als Säaggregat 13 ausgebildet ist. An einem Querbalken 14, der von dem Arbeitsfahrzeug entlang des Ackerbodens bewegt wird, sind mit vorgegebenen Abständen mehrere Anbaugeräte 12 nebeneinander gehalten.

Eine Kopplung des Anbaugeräts 12 mit dem Querbalken 14 erfolgt über eine Kopplungseinrichtung 15, die hier als Parallelogrammführung 16 ausgebildet ist und Koppelschwingen 17, 18 aufweist. Die Koppelschwingen 17, 18 sind parallel zueinander orientiert, verfügen über gleiche Längen und sind in unterschiedlichen Höhen in einem Endbereich an dem Querbalken 14 angelenkt, sowie in dem anderen Endbereich an dem Anbaugerät 12 angelenkt. Erfordert die Bewegung des Anbaugeräts 12 entlang des Ackerbodens, dass sich die Höhe des Anbaugeräts12 relativ zu dem Querbalken 14 und damit dem Arbeitsfahrzeug verändert, kann dies durch die parallele Verschwenkung der Koppelschwingen 17, 18 gewährleistet werden.

Das Anbaugerät 12 ist lediglich schematisch dargestellt und verfügt über einen Saatgutbehälter 19, in dem das auszubringende Saatgut bevorratet ist, mindestens ein Furchenrad 20, welches eine Furche in dem Ackerboden erzeugt, eine Säeinheit 21 mit zugeordnetem Sährohr, mittels dessen Saatgut aus dem Saatgutbehälter 19 vereinzelt und in die von dem Furchenrad 20 geschaffene Furche abgegeben wird, sowie ein Furchenschließrad 22 mittels dessen die Furche mit dem in der Furche angeordneten Saatgut geschlossen werden kann.

Ein Hydraulikzylinder 23 verfügt über entgegensetzt wirkende Druckkammer 24, 25, die als Anpresskammer 26 und Hubkammer 27 ausgebildet sind. Der Hydraulikzylinder 23 ist mit einem Fußpunkt an einer Koppelschwinge 18 angelenkt, während der andere Fußpunkt an dem Querbalken 14, hier im Bereich der Anlenkung der anderen Koppelstange 17, angelenkt ist.

Das Furchenschließrad 22 ist über eine Schwinge 28 an einem Rahmen 29 des Anbaugeräts 12 angelenkt. Ein weiterer Hydraulikzylinder 30 mit Druckkammern 31, 32, die als Anpresskammer 33 und Hubkammer 34 ausgebildet sind, beaufschlagt die Schwinge 28 und damit das Furchenschließrad 22. Ein Fußpunkt des Hydraulikzylinders 30 stützt sich dabei an dem Rahmen 29 des Anbaugeräts 12 ab, während der andere Fußpunkt des Hydraulikzylinders 30 an der Schwinge 28 abgestützt ist.

Die Hydraulikeinheit 1 weist einen Anschluss 35 auf, der über eine Hydraulikleitung 36 und eine Verzweigung 37 mit der Druckkammer 25 des Hydraulikzylinders 23 und der Druckkammer 32 des Hydraulikzylinders 30 verbunden ist.

Des Weiteren weist die Hydraulikeinheit 1 einen Anschluss 38 auf, der über eine Hydraulikleitung 39 mit der Druckkammer 24 des Hydraulikzylinders 23 verbunden ist.

Ein Anschluss 40 der Hydraulikeinheit 1 ist über eine Hydraulikleitung 41 mit der Druckkammer 31 des Hydraulikzylinders 30 verbunden.

Die Hydraulikeinheit 1 ist als singuläre Baueinheit ausgebildet, welche schematisch gestrichelt in Fig. 1 dargestellt ist, und über fluidische Leitungen sowie elektrische Leitungen mit den anderen Komponenten verbunden ist und hierzu die Anschlüsse 2, 6, 7, 35, 38 und 40 aufweist.

In der Hydraulikeinheit 1 befindet sich ein direkt gesteuertes Proportionalventil 42, dessen zwei Eingänge über die Anschlüsse 6, 7 mit der Druckquelle 8 und der Drucksenke 10 verbunden sind. Der Ausgang des direkt gesteuerten Proportionalventils 42 ist mit dem Anschluss 35 und über diesen mit den Druckkammern 25, 32 verbunden.

Des Weiteren ist in die Hydraulikeinheit 1 ein direkt gesteuertes Proportionalventil 43 integriert. Die Eingänge des direkt gesteuerten Proportionalventils 43 sind über die Anschlüsse 6, 7 mit der Druckquelle 8 und der Drucksenke 10 verbunden, während der Ausgang des direkt gesteuerten Proportionalventils 43 über den Anschluss 38 mit der Druckkammer 24 verbunden ist.

In die Hydraulikeinheit 1 ist eine elektronische Steuereinheit 44 integriert, die auch als CPU ausgebildet sein kann.

Die elektronische Steuereinheit 44 empfängt über den Anschluss 2 die verallgemeinerten Vorgaben 4 und sendet über den Anschluss 2 mindestens eine verallgemeinerte Messgröße 5.

Die Steuereinheit 44 wandelt unter Verwendung der eingangs erläuterten spezifischen Abhängigkeit 64 die verallgemeinerte Vorgabe 4 um in spezifische Steuersignale 45, 46, die über Steuerleitungen 47, 48 Steueranschlüssen 49, 50 der direkt gesteuerten Proportionalventile 42, 43 zugeführt werden.

Die Kinematiken der Schwinge 28 mit dem Furchenschließrad 22 und der Kopplungseinrichtung 15 sowie die Kolbenflächen der Hydraulikzylinder 23, 30 sind so aufeinander abgestimmt, dass sich eine gewünschte Verteilung der Anpresskräfte einerseits des Furchenrades 20 und andererseits des Furchenschließrades 22 an den Ackerboden ergibt.

In der Hydraulikeinheit 1 ist der Anschluss 40 vorzugsweise unmittelbar mit dem Anschluss 7 verbunden, womit gewährleistet ist, dass das Druckniveau in der Druckkammer 31 des Hydraulikzylinders 30 dem Druckniveau der Drucksenke 10 entspricht.

Durchaus möglich ist, dass ein Anpressrad oder Messrad 65 vorhanden ist, wie dieses in dem eingangs genannten Stand der Technik US 9,144,189 B2 beschrieben und dargestellt ist. Hierbei kann der Abstand der Aufstandsfläche des Messrads 65 von dem unteren Endbereich des Furchenrades 20 fest vorgegeben oder einstellbar sein, wobei dieser Abstand dann die Tiefe der in dem Ackerboden erzeugten Furche vorgibt.

Sofern in dem vorliegenden Anmeldungstext von einer Anpresskraft und einem zugeordneten Anpresskraftsensor die Rede ist, kann es sich bei der Anpresskraft oder dem Anpresskraftsensor um eine Anpresskraft oder einen Anpresskraftsensor des Furchenrades 20, des Furchenschließrades 22 und/oder des vorgenannten Anpressrades oder Messrades handeln.

Optional kann die Kopplungseinrichtung 15 einen Kopplungskinematiksensor 51 aufweisen, der eine Betriebsstellung der Kopplungseinrichtung 15 erfasst, die mit der Höhe des Anbaugeräts 12 relativ zu dem Arbeitsfahrzeug korreliert. Für das dargestellte Ausführungsbeispiel ist der Kopplungskinematiksensor 51 als Drehwinkelsensor 52 ausgebildet, der einen Schwenkwinkel der Koppelschwinge 17 erfasst. In diesem Fall verfügt die Hydraulikeinheit 1 über einen elektrischen Anschluss 53, über den die Hydraulikeinheit 1 mit dem Kopplungskinematiksensor 51 verbunden ist und das spezifische Messsignal 54 der elektronischen Steuereinheit 44 zugeführt wird. Die Steuereinheit 44 kann unter Berücksichtigung der spezifischen Abhängigkeit 64 aus dem spezifischen Messsignal 54 eine verallgemeinerte Messgröße 5 erzeugen und über den CAN-BUS 3 an die zentrale Steuereinheit 62 übertragen. Die spezifische Abhängigkeit 64 kann hierbei beispielsweise die Länge der Koppelschwinge 17 berücksichtigen, die dann von der Steuereinheit 44 verwendet wird, um aus dem spezifischen Messsignal 54 in Form des Drehwinkels die relative Höhenänderung des Anbaugeräts 12 zu ermitteln und als verallgemeinerte Messgröße 5 weiterzugeben.

Optional möglich ist, dass die Proportionalventile 42, 43 wie dargestellt über eine integrierte Druckbegrenzungsfunktion 55, 56 verfügen.

Optional möglich ist, dass der Druck ausgangsseitig der Proportionalventile 42, 43 und damit an den Anschlüssen 35, 36 bzw. einerseits in den Druckkammern 25, 32 und andererseits in der Druckkammer 24 mittels Drucksensoren 57, 58 erfasst wird.

**Fig. 2** zeigt ein grundsätzlich bis auf weiteres Fig. 1 entsprechendes Ausführungsbeispiel. Allerdings ist hier ein Fußpunkt des Hydraulikzylinder 23 nicht an der Koppelschwinge 18 angelenkt, sondern an der Koppelschwinge 17. Des Weiteren erfasst hier der Kopplungskinematiksensor 51 den Drehwinkel der Koppelschwinge 18.

**Fig. 3** zeigt ein Ausführungsbeispiel, bei dem kein Hydraulikzylinder 30 vorhanden ist, sondern vielmehr das Furchenschließrad 22 ausschließlich über das Eigengewicht und das Gewicht der Schwinge 28 an den Ackerboden gepresst wird.

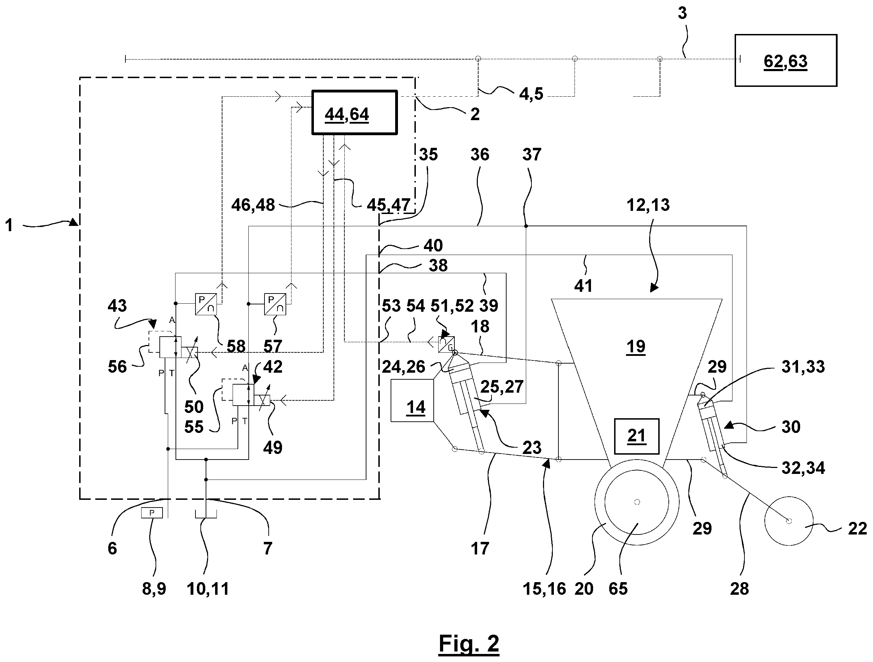

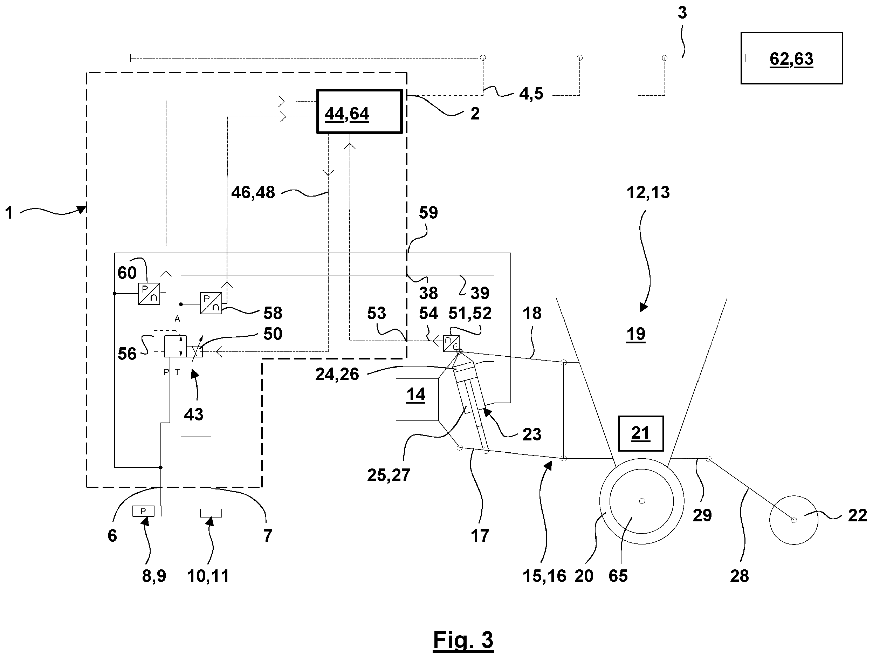

Gemäß Fig. 3 ist die Hubkammer 27 über einen Anschluss 59 der Hydraulikeinheit 1 unmittelbar mit dem Anschluss 6 und damit de Druckquelle 8 verbunden. Den Druck erfasst hier ein Drucksensor 60. Hingegen ist die Anpresskammer 26 entsprechend Fig. 2 über einen Anschluss 38 mit dem direkt gesteuerten Proportionalventil 56 verbunden, dessen Eingänge wie erläutert mit der Druckquelle 8 und der Drucksenke 10 verbunden sind. Auch hier erfasst ein Kopplungskinematiksensor 51 den Drehwinkel der Koppelschwinge 18.

Stellt die Druckquelle 8 einen konstanten Versorgungsdruck bereit, kann eine Regelung der Anpresskraft und damit eine Beaufschlagung der Anpresskammer 26 allein durch das Proportionalventil 43 erfolgen. Für den Fall, dass die Druckquelle 8 einen schwankenden Versorgungsdruck bereitstellt, können diese Schwankungen durch den Drucksensor 60 erfasst werden. Diese Druckschwankungen können dann von der Steuereinheit 44 bei der Ermittlung des spezifischen Steuersignals 46 zur Ansteuerung des Proportionalventils 43 berücksichtigt werden, indem der Druckunterschied in der Anpresskammer 27 infolge dieser Druckschwankung entsprechend in einem ausgesteuerten Druckunterschied in der Hubkammer 26 berücksichtigt wird.

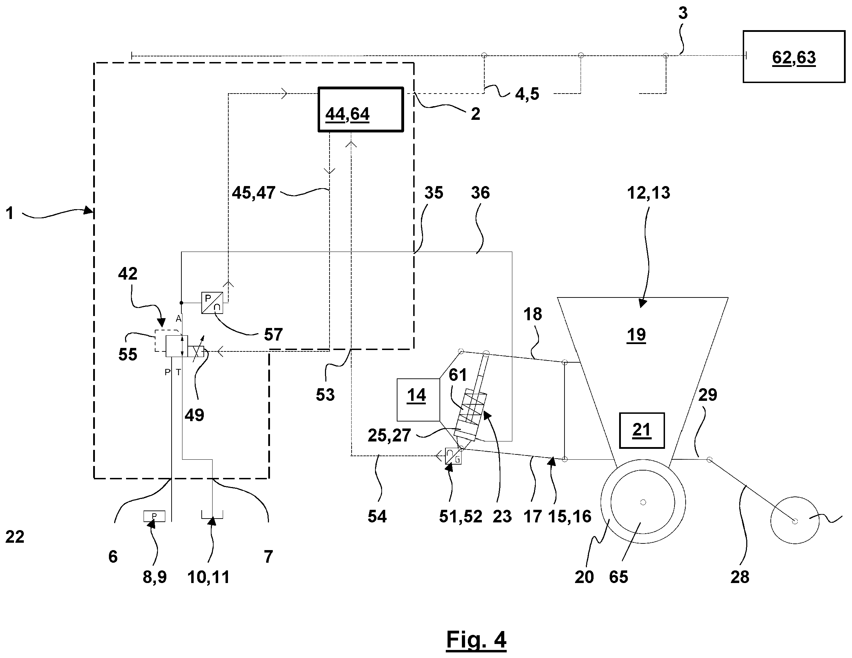

**Fig. 4** zeigt eine Ausführungsform, bei welcher der Hydraulikzylinder 23 als einfach wirkender Hydraulikzylinder ausgebildet ist, der lediglich eine druckbeaufschlagte Hubkammer 27 aufweist, während die Anpresskraft mittels einer entgegengesetzt zur Hubkammer 27 wirkenden, in den Hydraulikzylinder 23 integrierten Anpresskraftfeder 61 erzeugt wird. Der Druck in der Hubkammer 27 wird in diesem Fall mittels des Proportionalventils 42 geregelt.

Die zentrale Steuereinheit 62 erstellt verallgemeinerte Vorgaben 4, die mittels der Steuereinheit 44 der Hydraulikeinheit 1 unter Verwendung der spezifischen Abhängigkeit 64 umgerechnet wird in die spezifischen Steuersignale 45, 46 für die Ansteuerung der Proportionalventile 42, 43. Hierbei berücksichtigt die spezifische Abhängigkeit 64 insbesondere
- die Kinematik der spezifischen vorhandenen Kopplungseinrichtung 15,
- Besonderheiten des Typs des Anbaugeräts 12 wie dessen Masse, dessen Zahl von Aufstandsrädern und Werkzeugen wie Furchenräder 20 und/oder Furchenschließrädern 22,
- das Vorhandensein oder die Abwesenheit eines weiteren Hydraulikzylinders 30,
- die Masse des Anbaugeräts 12 oder von dessen Komponenten und/oder
- eine für das Anbaugerät spezifischen Anpresskraft eines Anpressrades oder Messrades, eines Furchenrades 20 und/oder eines Furchenschließrades 22.

Unter Berücksichtigung einer für das Anbaugerät 12 spezifischen Abhängigkeit 64 erzeugt die Steuereinheit eine verallgemeinerte Messgröße 5 aus dem spezifischen Messsignalen der Drucksensoren 57, 58, des Kopplungskinematiksensors 51 und/oder eines Anpresskraftsensors. Die derart erzeugte verallgemeinerte Messgröße 5 wird dann von der Steuereinheit 44 der Hydraulikeinheit 1 an die zentrale Steuereinheit 62 übermittelt, beispielsweise für eine Anzeige der verallgemeinerten Messgröße 5 für den Benutzer.

Vorzugsweise erfolgt die Auslegung der Kinematik und/oder die Ansteuerung des Hydraulikzylinder 23 derart, dass die Koppelschwingen 17, 18 gegenüber der Horizontalen, ausgehend von dem Querbalken 14 und entgegen der Vorwärts-Fahrrichtung des Arbeitsfahrzeugs, nach unten geneigt sind.

An Stelle der dargestellten Hydraulikzylinder 23, 30 kann ein Arbeitszylinder beliebiger Bauart, insbesondere auch in der Bauart eines Plungerzylinders, Einsatz finden.

Während in den Figuren das Anbaugerät 12 als Säaggregat 13 ausgebildet war, kann im Rahmen der Erfindung ein Anbaugerät 12 auch als Hackaggregat oder beliebiges anderweitiges Anbaugerät ausgebildet sein.

Wird ein Anstieg eines Drucks in der Anpresskammer 26 und/oder der von einem Anpresskraftsensor gemessenen Anpresskraft festgestellt, der einen Schwellwert überschreitet oder mit weiterer Bewegung des Arbeitsfahrzeuges größer wird, kann für einen Vorschlag der Erfindung darauf geschlossen werden, dass sich Bodenmaterial vor dem Anbaugerät anhäuft, indem Bodenmaterial vor dem Anbaugerät hergeschoben wird. Bei einer derartigen Detektierung kann eine Reduzierung der Anpresskraft durch geeignete Ansteuerung der Proportionalventile 42, 43 ausgesteuert werden und ein kurzzeitiges Anheben der Kopplungseinrichtung 15 herbeigeführt werden, womit das angehäufte Bodenmaterial überquert werden kann. Hieran anschließend wird dann die Anpresskraft mittels der Ansteuerung der Proportionalventile 42, 43 wieder erhöht mit dann Wiedereinsetzen der normaler Betriebsweise.

Möglich ist, dass die spezifische, an das Anbaugerät 12 und die Kopplungseinrichtung 15 angepasste Abhängigkeit 64 von dem Benutzer über eine Eingabe- und/oder Ausgabeeinheit 63 vorgegeben und über den CAN-BUS 3 und den Anschluss 2 an die Steuereinheit 44 der Hydraulikeinheit 1 übertragen wird.

### BEZUGSZEICHENLISTE

- 1: Hydraulikeinheit
- 2: Anschluss
- 3: CAN-Bus
- 4: verallgemeinerte Vorgabe
- 5: verallgemeinerte Messgrösse
- 6: Anschluss
- 7: Anschluss
- 8: Druckquelle
- 9: Pumpe
- 10: Drucksenke
- 11: Tank
- 12: Anbaugerät
- 13: Säaggregat
- 14: Querbalken
- 15: Kopplungseinrichtung
- 16: Parallelogrammführung
- 17: Koppelschwinge
- 18: Koppelschwinge
- 19: Saatgutbehälter
- 20: Furchenrad
- 21: Säeinheit
- 22: Furchenschließrad
- 23: Hydraulikzylinder
- 24: Druckkammer
- 25: Druckkammer
- 26: Anpresskammer
- 27: Hubkammer
- 28: Schwinge
- 29: Rahmen
- 30: Hydraulikzylinder
- 31: Druckkammer
- 32: Druckkammer
- 33: Anpresskammer
- 34: Hubkammer
- 35: Anschluss
- 36: Hydraulikleitung
- 37: Verzweigung
- 38: Anschluss
- 39: Hydraulikleitung
- 40: Anschluss
- 41: Hydraulikleitung
- 42: direkt gesteuertes Proportionalventil
- 43: direkt gesteuertes Proportionalventil
- 44: elektronische Steuereinheit
- 45: spezifisches Steuersignal
- 46: spezifisches Steuersignal
- 47: Steuerleitung
- 48: Steuerleitung
- 49: Steueranschluss
- 50: Steueranschluss
- 51: Kopplungskinematiksensor
- 52: Drehwinkelsensor
- 53: Anschluss
- 54: spezifisches Messignal
- 55: Druckbegrenzungsfunktion
- 56: Druckbegrenzungsfunktion
- 57: Drucksensor
- 58: Drucksensor
- 59: Anschluss
- 60: Drucksensor
- 61: Anpresskraftfeder
- 62: zentrale Steuereinheit
- 63: Eingabe- und/oder Ausgabeeinheit
- 64: spezifische Abhängigkeit
- 65: Anpressrad

## Patentansprüche

1. Verfahren zur Ausrüstung oder Nachrüstung eines landwirtschaftlichen Arbeitsfahrzeugs mit einem Anbaugerät (12), welches über einen Hydraulikzylinder (23) mit einer geregelten Anpresskraft an den Ackerboden gepresst wird, mit folgenden Verfahrensschritten:
a) Bereitstellen einer Hydraulikeinheit (1) mit
aa) einem Befestigungsbereich, über den die Hydraulikeinheit (1) befestigbar ist,
ab) einer elektronischen Steuereinheit (44),
ac) einem Anschluss (7) für eine Drucksenke (10) und einem Anschluss (6) für eine Druckquelle (8),
ad) mindestens einem Anschluss (35; 38) für eine zu einer Druckkammer (25; 24) des Hydraulikzylinders (23) führende Hydraulikleitung (36; 39),
ae) einem Ventil, welches von der elektronischen Steuereinheit (44) zu Vorgabe des Drucks an dem Anschluss (35; 38) für die zu der Druckkammer (25; 24) des Hydraulikzylinders (23) führende Hydraulikleitung (36; 39) angesteuert wird,
b) Befestigung der Hydraulikeinheit mit dem Befestigungsbereich an dem Arbeitsfahrzeug, einem Querbalken (14) oder dem Anbaugerät (12),
c) Verbindung der Steuereinheit (44) der Hydraulikeinheit (1) über eine Busleitung mit einer zentralen Steuereinheit (62) und/oder einer Eingabe- und/oder Ausgabeeinheit (63),
d) Verbindung des Anschlusses (35; 38) mit der zu der Druckkammer (25; 24) des Hydraulikzylinders (23) führenden Hydraulikleitung (36; 39), **gekennzeichnet durch** den folgenden Verfahrensschritt:
e) Vorgabe und/oder Anpassung einer von der Steuereinheit (44) berücksichtigten spezifischen Abhängigkeit (64) an einen spezifischen Ausstattungs- und/oder Montagetyp derart, dass
ea) nicht an den jeweiligen spezifischen Ausstattungs- und/oder Montagetyp angepasste verallgemeinerte Vorgaben (4) der zentralen Steuereinheit (62) und/oder der Eingabe- und/oder Ausgabeeinheit (63) über die spezifische Abhängigkeit (64) umgewandelt werden in an den jeweiligen spezifischen Ausstattungs- und/oder Montagetyp angepasste spezifische Steuersignale (45; 46) der Hydraulikeinheit (23) und/oder
eb) von dem jeweiligen spezifischen Ausstattungs- und/oder Montagetyp abhängige spezifische Messsignale (54) über die spezifische Abhängigkeit (64) umwandelt werden in verallgemeinerte Messgrößen (5), die dann an die zentrale Steuereinheit (62) und/oder Eingabe- und/oder Ausgabeeinheit (63) übertragen werden.

2. Verfahren nach Anspruch 1, **wobei** die Hydraulikeinheit (1) einen Anschluss für einen Anpresskraftsensor aufweist und ein Anpresskraftsensor an den Anschluss angeschlossen wird, wobei vorzugsweise die spezifische Abhängigkeit (64) einen spezifischen Typ des Anpresskraftsensors und/oder dessen Montagetyp in Form der Art der Integration des Anpresskraftsensors berücksichtigt.

3. Verfahren nach Anspruch 1 oder 2, **wobei** die Hydraulikeinheit (1) einen Anschluss (53) für einen Kopplungskinematiksensor (51) aufweist und ein Kopplungskinematiksensor (51) an den Anschluss (53) angeschlossen wird, wobei vorzugsweise die spezifische Abhängigkeit (64) einen spezifischen Typ der Kopplungseinrichtung (15) und/oder einen spezifischen Typ des Kopplungskinematiksensors (51) berücksichtigt.

4. Verfahren nach einem der Ansprüche 1 bis 3, **wobei** die Hydraulikeinheit (1) einen Anschluss für einen Behälterinhalts-Sensor aufweist und ein Behälterinhalts-Sensor an den Anschluss angeschlossen wird, wobei vorzugsweise die spezifische Abhängigkeit (64) einen spezifischen Typ des Behälterinhalts-Sensors und/oder dessen Montagetyp in Form der Art der Integration des Behälterinhalts-Sensors und/oder eines spezifischen Typs des Produkts in einem Behälter berücksichtigt.

5. Verfahren nach einem der vorhergehenden Ansprüche, **wobei** die Hydraulikeinheit (1) mindestens ein direkt gesteuertes Proportionalventil (42; 43) aufweist, welches mit einem spezifischen Steuersignal (45; 46), welches unter Berücksichtigung einer verallgemeinerten Vorgabe (4) der zentralen Steuereinheit (62) und/oder der Eingabe- und/oder Ausgabeeinheit (63) und der spezifischen Abhängigkeit (64) von der Steuereinheit (44) ermittelt worden ist, von der Steuereinheit (44) angesteuert wird, wobei vorzugsweise eine Druckbegrenzungsfunktion (55; 56) vorgesehen ist.

6. Verfahren nach Anspruch 5, **wobei** die Hydraulikeinheit (1) mindestens einen Drucksensor (57; 58) aufweist, der als Drucksignal den Druck an dem Anschluss (35; 38) für die zu der Druckkammer (25; 24) des Hydraulikzylinders (23) führende Hydraulikleitung (36; 39) erfasst, und das Proportionalventil (42; 43) von der Steuereinheit (44) unter Berücksichtigung des Drucksignals angesteuert wird.

7. Verfahren nach einem der vorhergehenden Ansprüche, **wobei** mittels einer Steuerlogik der Steuereinheit (44) eine Ermittlung eines Bodenbewertungsfaktors erfolgt.

8. Verfahren nach einem der vorhergehenden Ansprüche, **wobei** auf Grundlage
a) eines Messsignals mindestens eines Drucksensors (57, 58) für eine Messung des Drucks in einer Druckkammer (24, 25) in dem Hydraulikzylinder (23) und/oder
b) eines Messsignales eines Kopplungskinematiksensors (51) und/oder
c) eines Messsignales eines Anpresskraftsensors
ein Bodenbewertungsfaktor ermittelt wird und/oder eine Regelung des Drucks in mindestens einer Druckkammer (24, 25) in dem Hydraulikzylinder (23) erfolgt, wobei vorzugsweise die Dynamik oder Zeitspanne einer Änderung des Messignales des Kopplungskinematiksensors(51) von der Regelung berücksichtigt wird.

9. Verfahren nach einem der vorhergehenden Ansprüche, **wobei** an einem Querbalken (14) nebeneinander mehrere Anbaugeräte (12) gehalten sind, welche jeweils eine zugeordnete Hydraulikeinheit (1) aufweisen, wobei die Hydraulikeinheiten (1) mit denselben verallgemeinerten Vorgaben (4) von der zentralen Steuereinheit (62) und/oder der Eingabe- und/oder Ausgabeeinheit (63) beaufschlagt werden.

10. Verfahren nach einem der vorhergehenden Ansprüche, **wobei** auf Grundlage eines Messsignales eine Regelung einer Dämpfung erfolgt.

11. Verfahren nach einem der vorhergehenden Ansprüche, **wobei** das Anbaugerät (12) ein Säaggregat (13) ist.

12. Verfahren nach einem der vorhergehenden Ansprüche, **wobei** das Anbaugerät (12) ein Hackaggregat ist.

## Claims

1. Method for equipping or retrofitting an agricultural working vehicle with an implement (12), which is pressed against the soil with a controlled contact force via a hydraulic cylinder (23), the method comprising the following method steps:
a) providing a hydraulic unit (1) comprising
aa) a mounting region by means of which the hydraulic unit (1) can be mounted,
ab) an electronic control unit (44),
ac) a port (7) for a pressure sink (10) and a port (6) for a pressure source (8),
ad) at least one port (35; 38) for a hydraulic line (36; 39) leading to a pressure chamber (25; 24) of the hydraulic cylinder (23),
ae) a valve which is controlled by the electronic control unit (44) in order to set the pressure at the port (35; 38) for the hydraulic line (36; 39) leading to the pressure chamber (25; 24) of the hydraulic cylinder (23),
b) mounting the hydraulic unit, by means of the mounting region, on the working vehicle, on a transverse beam (14), or on the implement (12),
c) connecting the control unit (44) of the hydraulic unit (1) via a bus line to a central control unit (62) and/or an input and/or output unit (63),
d) connecting the port (35; 38) to the hydraulic line (36; 39) leading to the pressure chamber (25; 24) of the hydraulic cylinder (23),
**characterized by the following method step:**
e) setting and/or adapting a specific dependency (64) taken into account by the control unit (44) to a specific equipment type and/or mounting type such that
ea) generalized specifications (4) of the central control unit (62) and/or the input and/or output unit (63), which are not adapted to the respective specific equipment type and/or mounting type, are converted via the specific dependency (64) into specific control signals (45; 46) of the hydraulic unit (23) adapted to the respective specific equipment type and/or mounting type, and/or
eb) specific measurement signals (54), which depend on the respective specific equipment type and/or mounting type, are converted via the specific dependency (64) into generalized measurement variables (5), which are then transmitted to the central control unit (62) and/or to the input and/or output unit (63).

2. Method according to claim 1, wherein the hydraulic unit (1) comprises a connection for a contact force sensor and a contact force sensor is connected to the connection, wherein preferably the specific dependency (64) takes into account a specific type of the contact force sensor and/or its mounting type in the form of the manner of integration of the contact force sensor.

3. Method according to claim 1 or 2, wherein the hydraulic unit (1) comprises a connection (53) for a coupling kinematics sensor (51) and a coupling kinematics sensor (51) is connected to the connection (53), wherein preferably the specific dependency (64) takes into account a specific type of the coupling device (15) and/or a specific type of the coupling kinematics sensor (51).

4. Method according to one of claims 1 to 3, wherein the hydraulic unit (1) comprises a connection for a container content sensor and a container content sensor is connected to the connection, wherein preferably the specific dependency (64) takes into account a specific type of the container content sensor and/or its mounting type in the form of the manner of integration of the container content sensor and/or a specific type of the product in a container.

5. Method according to one of the preceding claims, wherein the hydraulic unit (1) comprises at least one directly controlled proportional valve (42; 43), which is controlled by the control unit (44) with a specific control signal (45; 46), which has been determined by the control unit (44) taking into account a generalized specification (4) of the central control unit (62) and/or of the input and/or output unit (63) and the specific dependency (64), wherein preferably a pressure limiting function (55; 56) is provided.

6. Method according to claim 5, wherein the hydraulic unit (1) comprises at least one pressure sensor (57; 58), which detects, as a pressure signal, the pressure at the port (35; 38) for the hydraulic line (36; 39) leading to the pressure chamber (25; 24) of the hydraulic cylinder (23), and the proportional valve (42; 43) is controlled by the control unit (44) taking into account the pressure signal.

7. Method according to one of the preceding claims, wherein a soil evaluation factor is determined by means of control logic of the control unit (44).

8. Method according to one of the preceding claims, wherein, on the basis of
a) a measurement signal of at least one pressure sensor (57, 58) for measuring the pressure in a pressure chamber (24, 25) in the hydraulic cylinder (23) and/or
b) a measurement signal of a coupling kinematics sensor (51) and/or
c) a measurement signal of a contact force sensor,
a soil evaluation factor is determined and/or a control of the pressure in at least one pressure chamber (24, 25) in the hydraulic cylinder (23) is provided, wherein preferably the dynamics or time span of a change of the measurement signal of the coupling kinematics sensor (51) is taken into account by the control.

9. Method according to one of the preceding claims, wherein a plurality of implements (12) are held besides one another on a transverse beam (14), each of which has an associated hydraulic unit (1), wherein the hydraulic units (1) are biased with the same generalized specifications (4) by the central control unit (62) and/or the input and/or output unit (63).

10. Method according to one of the preceding claims, wherein a control of a damping is provided on the basis of a measurement signal.

11. Method according to one of the preceding claims, wherein the implement (12) is a seeding aggregat (13).

12. Method according to one of the preceding claims, wherein the implement (12) is a hoeing unit.

## Revendications

1. Procédé pour l'équipement ou l'adaptation d'un véhicule de travail agricole avec un dispositif rapporté (12), lequel est pressé contre le sol agricole par un vérin hydraulique (23) avec une force d'appui régulée, comprenant les étapes du procédé suivantes :
a) fourniture d'une unité hydraulique (1) avec
aa) une zone de fixation, par laquelle l'unité hydraulique (1) peut être fixée,
ab) une unité de commande électronique (44),
ac) un raccord (7) pour un réservoir de pression (10) et un raccord (6) pour une source de pression (8),
ad) au moins un raccord (35; 38) pour une conduite hydraulique (36; 39) menant à une chambre de pression (25; 24) du vérin hydraulique (23),
ae) une soupape, laquelle est commandée par l'unité de commande électronique (44) pour la consigne de la pression au niveau du raccord (35; 38) pour la conduite hydraulique (36; 39) menant à la chambre de pression (25; 24) du vérin hydraulique (23),
b fixation de l'unité hydraulique avec la zone de fixation au véhicule de travail agricole, à une poutre transversale (14) ou au dispositif rapporté (12),
c) connexion de l'unité de commande (44) de l'unité hydraulique (1) via une ligne de bus avec une unité de commande centrale (62) et/ou une unité d'entrée et/ou une unité de sortie (63),
d) connexion du raccord (35; 38) avec la conduite hydraulique (36; 39) menant à la chambre de pression (25; 24) du vérin hydraulique (23), **caractérisé par** l'étape du procédé suivante :
e) consigne et/ou adaptation d'une dépendance spécifique (64) prise en compte par l'unité de commande (44) à un type d'équipement spécifique et/ou un type de montage spécifique de telle sorte que
ea) des consignes généralisées (4) de l'unité de commande centrale (62) et/ou de l'unité d'entrée et/ou de sortie (63), qui ne sont pas adaptées au type d'équipement spécifique et/ou au type de montage spécifique respectif, sont converties via la dépendance spécifique (64) en signaux de commande spécifiques (45; 46) de l'unité hydraulique (23) adaptés au type d'équipement spécifique et/ou au type de montage spécifique respectif et/ou
eb) des signaux de mesure spécifiques (54) dépendant du type d'équipement spécifique et/ou du type de montage spécifique respectif sont convertis via la dépendance spécifique (64) en grandeurs de mesure généralisées (5), qui sont ensuite transmises à l'unité de commande centrale (62) et/ou à l'unité d'entrée et/ou à l'unité de sortie (63).

2. Procédé selon la revendication 1, dans lequel l'unité hydraulique (1) présente un raccord pour un capteur de force d'appui et un capteur de force d'appui est connecté au raccord, la dépendance spécifique (64) prenant de préférence en compte un type spécifique du capteur de force d'appui et/ou son type de montage sous la forme du mode d'intégration du capteur de force d'appui.

3. Procédé selon la revendication 1 ou 2, dans lequel l'unité hydraulique (1) présente un raccord (53) pour un capteur de cinématique de couplage (51) et un capteur de cinématique de couplage (51) est connecté au raccord (53), la dépendance spécifique (64) prenant de préférence en compte un type spécifique du dispositif de couplage (15) et/ou un type spécifique du capteur de cinématique de couplage (51).

4. Procédé selon l'une des revendications 1 à 3, dans lequel l'unité hydraulique (1) présente un raccord pour un capteur de contenu de réservoir et un capteur de contenu de réservoir est connecté au raccord, la dépendance spécifique (64) prenant de préférence en compte un type spécifique du capteur de contenu de réservoir et/ou son type de montage sous la forme du mode d'intégration du capteur de contenu de réservoir et/ou un type spécifique du produit dans un réservoir.

5. Procédé selon l'une des revendications précédentes, dans lequel l'unité hydraulique (1) présente au moins une soupape proportionnelle (42; 43) commandée directement, laquelle est commandée par un signal de commande spécifique (45; 46), lequel a été déterminé par l'unité de commande (44) en tenant compte d'une consigne généralisée (4) de l'unité de commande centrale (62) et/ou de l'unité d'entrée et/ou de sortie (63) et de la dépendance spécifique (64), une fonction de limitation de pression (55; 56) étant de préférence prévue.

6. Procédé selon la revendication 5, dans lequel l'unité hydraulique (1) présente au moins un capteur de pression (57; 58), qui détecte comme signal de pression la pression au niveau du raccord (35; 38) pour la conduite hydraulique (36; 39) menant à la chambre de pression (25; 24) du vérin hydraulique (23)
et la soupape proportionnelle (42; 43) est commandée par l'unité de commande (44) en tenant compte du signal de pression.

7. Procédé selon l'une des revendications précédentes, dans lequel une détermination d'un facteur d'évaluation du sol est effectuée au moyen d'une logique de commande de l'unité de commande (44).

8. Procédé selon l'une des revendications précédentes, dans lequel, sur la base
a) d'un signal de mesure d'au moins un capteur de pression (57, 58) pour une mesure de la pression dans une chambre de pression (24, 25) dans le vérin hydraulique (23) et/ou b) d'un signal de mesure d'un capteur de cinématique de couplage (51) et/ou
c) d'un signal de mesure d'un capteur de force d'appui un facteur d'évaluation du sol est déterminé et/ou une régulation de la pression dans au moins une chambre de pression (24, 25) dans le vérin hydraulique (23) est effectuée, la dynamique ou la durée d'un changement du signal de mesure du capteur de cinématique de couplage (51) étant de préférence prise en compte par la régulation.

9. Procédé selon l'une des revendications précédentes, dans lequel plusieurs dispositifs rapportés (12) sont maintenus côte à côte sur une poutre transversale (14), lesquels présentent chacun une unité hydraulique (1) associée, les unités hydrauliques (1) étant appliquées avec les mêmes consignes généralisées (4) par l'unité de commande centrale (62) et/ou l'unité d'entrée et/ou de sortie (63).

10. Procédé selon l'une des revendications précédentes, dans lequel une régulation d'un amortissement est effectuée sur la base d'un signal de mesure.

11. Procédé selon l'une des revendications précédentes, dans lequel le dispositif rapporté (12) est une unité de semis (13).

12. Procédé selon l'une des revendications précédentes, dans lequel le dispositif rapporté (12) est une unité de binage.
